(19) Europäisches Patentamt / European Patent Office / Office européen des brevets

(11) **EP 4 687 318 A1**

(12) # DEMANDE DE BREVET EUROPEEN

(43) Date de publication:
**04.02.2026 Bulletin 2026/06**

(21) Numéro de dépôt: **25172095.9**

(22) Date de dépôt: **23.04.2025**

(51) Classification Internationale des Brevets (IPC):
***H04L 9/00*** *(2022.01)*

(52) Classification Coopérative des Brevets (CPC):
**H04L 9/003;** H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **29.07.2024 FR 2408381**

(71) Demandeur: **IDEMIA France**
**92400 Courbevoie (FR)**

(72) Inventeur: **BETTALE, Luk**
**92400 Courbevoie (FR)**

(74) Mandataire: **Idemia**
**Service IP / IST**
**2, place Samuel de Champlain**
**92400 Courbevoie (FR)**

(54) **PROCÉDÉ DE COMPARAISON SÉCURISÉE À ZÉRO, DISPOSITIF ÉLECTRONIQUE ET PROGRAMME D'ORDINATEUR ASSOCIÉS**

(57) Procédé de comparaison sécurisée à zéro d'une donnée d'entrée masquée sous la forme d'un premier ensemble de n premières parties d'un masquage additif modulaire, n étant un entier strictement supérieur à 1 et le procédé comprenant les étapes suivantes :
- Détermination (E2) d'un deuxième ensemble de données intermédiaires à partir des premières parties,
- Détermination (E4) d'un troisième ensemble de troisièmes parties d'un masquage booléen du résultat de la comparaison à partir des données intermédiaires,
le procédé étant caractérisé en ce que le deuxième ensemble a une partition en un premier sous-ensemble et un deuxième sous-ensemble tels qu'un premier résultat obtenu par combinaison avec des ou exclusif de zéro et des données intermédiaires du premier sous-ensemble, est égal à un deuxième résultat obtenu par combinaison avec des ou exclusif de zéro et des données intermédiaires du deuxième sous-ensemble, quand et seulement quand la donnée d'entrée vaut 0.

Figure 2

EP 4 687 318 A1

## Description

L'invention concerne le domaine de la cryptographie informatique. Elle concerne plus particulièrement un procédé de comparaison sécurisée à zéro. L'invention concerne également un dispositif électronique et un programme d'ordinateur associés.

De façon connue, un algorithme cryptographique peut être utilisé pour chiffrer, déchiffrer, signer ou vérifier la signature d'une donnée. Un tel algorithme cryptographique est par exemple un algorithme cryptographique à clés asymétriques mis en œuvre par un dispositif électronique, typiquement un algorithme RSA ou un algorithme à courbe elliptique mis en œuvre par la puce d'une carte à puce.

L'émergence de calculateurs quantiques rend ces algorithmes cryptographiques non sûrs.

Il est donc souhaitable d'utiliser des algorithmes cryptographiques adaptés pour garantir la sécurité face à un attaquant disposant d'un calculateur quantique. Ces algorithmes cryptographiques sont dénommés algorithmes cryptographiques post-quantiques.

Dans les algorithmes cryptographiques, de nombreuses procédures nécessitent de tester si une variable donnée est égale à zéro ou pas.

Les algorithmes cryptographiques peuvent nécessiter de tester une ou plusieurs données pour vérifier si elles sont égales à zéro ou pas.

Lorsqu'une comparaison à zéro traite des données secrètes et que le résultat du test doit rester secret, un masquage doit être utilisé pour sécuriser les implémentations contre les attaques par canaux auxiliaires.

Plusieurs procédés de comparaison à zéro d'une donnée d'entrée masquée sous la forme d'un premier ensemble de premières parties d'un masquage additif modulaire de module q existent. Cependant, le résultat de la comparaison est généralement une donnée de sortie non masquée qui vaut 1 si la donnée d'entrée a pour valeur 0, et 0 si la donnée d'entrée a une valeur différente de 0. Ces procédés sont donc vulnérables à l'analyse par canaux auxiliaires.

Le document « Jean-Sébastien Coron, François Gérard, Simon Montoya, and Rina Zeitoun, High-order polynomial comparison and masking lattice-based encryption. IACR Trans. on Cryptographie Hardware And Embedded Systems, DOI :10.46586, 2023(1):153-192, 2023 » décrit un procédé de comparaison à zéro d'une donnée d'entrée masquée sous la forme d'un premier ensemble de premières parties d'un masquage additif modulaire de module q, le résultat de ladite comparaison étant sous forme masquée.

Cependant, ce procédé sollicite beaucoup le dispositif électronique. En outre, ce procédé se limite à un module q qui est un nombre premier.

Pour remédier à ces inconvénients, la présente invention propose selon un premier aspect, un procédé de comparaison sécurisée à zéro d'une donnée d'entrée masquée sous la forme d'un premier ensemble de n premières parties d'un masquage additif modulaire, n étant un entier strictement supérieur à 1, le procédé étant mis en œuvre par un dispositif électronique et le procédé comprenant les étapes suivantes :

- Détermination d'un deuxième ensemble de n données intermédiaires à partir des n premières parties,
- Détermination d'un troisième ensemble de troisièmes parties d'un masquage booléen d'un résultat de la comparaison à partir des données intermédiaires,

le procédé étant caractérisé en ce que l'étape de détermination d'un deuxième ensemble de n données intermédiaires à partir des n premières parties, détermine un deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0.

D'autres caractéristiques avantageuses et non limitatives du procédé conforme à l'invention, prises individuellement ou selon toutes les combinaisons techniquement possibles, sont les suivantes :

- le masquage additif modulaire est de module q non nul ;
- le premier résultat est égal à une somme modulo le module q des premières parties d'un troisième sous-ensemble, et le deuxième résultat est égal à une somme modulo le module q des opposés des premières parties d'un quatrième sous-ensemble ;
- le troisième sous-ensemble et le quatrième sous-ensemble sont une partition du premier ensemble ;
- n a pour valeur 2, la donnée intermédiaire du premier sous-ensemble est une première partie, et la donnée intermédiaire du deuxième sous-ensemble est l'opposé modulo le module q d'une première partie distincte de la première partie du premier sous-ensemble ;
- n est strictement supérieur à 2, les données intermédiaires du premier sous-ensemble sont un masquage booléen d'une donnée d'entrée partielle, les premières parties du troisième sous-ensemble étant un masquage additif modulaire de module q de la donnée d'entrée partielle, et les données intermédiaires du deuxième sous-ensemble sont un masquage booléen d'une autre donnée d'entrée partielle, les opposés modulo le module q des premières parties du quatrième sous-ensemble étant un masquage additif modulaire de module q de l'autre donnée d'entrée partielle ;

- l'étape de détermination d'un deuxième ensemble de n données intermédiaires à partir des n premières parties comprend la détermination du troisième sous-ensemble et du quatrième sous-ensemble, la détermination des données intermédiaires du premier sous-ensemble par application d'un algorithme de conversion d'un masquage additif modulaire en un masquage booléen aux premières parties du troisième sous-ensemble, et la détermination des données intermédiaires du deuxième sous-ensemble par application d'un algorithme de conversion d'un masquage additif modulaire en un masquage booléen aux opposés modulo le module q des premières parties du quatrième sous-ensemble ;
- le premier sous-ensemble et le deuxième sous-ensemble ont une différence de cardinal inférieure ou égale à 1 ;
- l'étape de détermination du troisième ensemble traite toutes les données intermédiaires du deuxième ensemble comme des deuxièmes parties d'un masquage booléen ;
- chaque donnée intermédiaire a une taille de k bits et un rang i compris entre 1 et n, k étant strictement supérieur à 1 ;
- chaque troisième partie a une taille de 1 bit et un rang i compris entre 1 et n ;
- la détermination du troisième ensemble des troisièmes parties comprend la mise en œuvre d'une initialisation d'une troisième partie du troisième ensemble à 1 et des autres troisièmes parties dudit troisième ensemble à 0, puis la mise à jour d'une donnée intermédiaire de même rang que la troisième partie initialisée à 1, avec le complément à 1 de ladite donnée intermédiaire de même rang, puis la mise en œuvre de k sous-étapes de mise à jour des troisièmes parties du troisième ensemble, lesdites sous-étapes de mise à jour ayant des indices respectifs allant de 0 à k-1 , chaque sous-étape effectuant un calcul défini comme suit : $(b_1, \ldots, b_n) \leftarrow \mathrm{SecAnd}(1, (b_1, \ldots, b_n), (y_1^j, \ldots, y_n^j))$

avec SecAnd une implémentation sécurisée de l'opérateur booléen et, $y_i^j$ le bit de rang j de la donnée intermédiaire de rang i, $b_i$ la troisième partie de rang i, j ayant pour valeur l'indice de la sous-étape concernée ;
- l'implémentation sécurisée de l'opération booléen et, de la sous-étape d'indice j, mets à jour les troisièmes parties telles que : $\bigoplus_{i=1}^{n} b_i = \left( \bigoplus_{i=1}^{n} b_i \right) \wedge \left( \bigoplus_{i=1}^{n} y_i^j \right)$ avec ⊕ l'opération ou exclusif et A l'opérateur booléen et ;
- le procédé est mis en œuvre dans un algorithme cryptographique ;
- l'algorithme cryptographique est un algorithme parmi l'algorithme Hamming Quasi-Cyclic, l'algorithme FrodoKEM et l'algorithme Crystals-Kyber.

Selon un deuxième aspect, l'invention propose un programme d'ordinateur comprenant des instructions exécutables par un processeur et adaptées à mettre en œuvre un procédé de comparaison sécurisée à zéro tel que défini précédemment, lorsque ces instructions sont exécutées par le processeur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Au moins une partie des procédés selon l'invention peut être mise en œuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "bloc".

Selon un troisième aspect, l'invention propose un dispositif électronique apte à mettre en œuvre une comparaison sécurisée à zéro d'une donnée d'entrée masquée sous la forme d'un premier ensemble de n premières parties d'un masquage additif modulaire, n étant un entier strictement supérieur à 1, le dispositif électronique comprenant :

- un bloc de détermination d'un deuxième ensemble de n données intermédiaires configuré pour déterminer un deuxième ensemble de n données intermédiaires à partir des n premières parties,
- un bloc de détermination d'un troisième ensemble de troisièmes parties configuré pour déterminer un troisième ensemble de troisièmes parties d'un masquage booléen d'un résultat de la comparaison à partir des données intermédiaires,

le dispositif électronique étant caractérisé en ce que le bloc de détermination d'un deuxième ensemble de n données intermédiaires est configuré pour déterminer un deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0.

Ce dispositif électronique peut être configuré pour la mise en œuvre de chacune des possibilités de réalisation envisagées pour le procédé de comparaison sécurisée à zéro tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures :

Figure 1 représente schématiquement un mode de réalisation préféré d'un dispositif électronique selon l'invention ;
Figure 2 illustre sous forme de logigramme les étapes principales d'une comparaison sécurisée à zéro selon un premier mode de réalisation de l'invention ;
Figure 3 illustre sous forme de logigramme les étapes principales d'une comparaison sécurisée à zéro selon un deuxième mode de réalisation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Dans le cadre de la présente description, des qualificatifs « premier », « deuxième », « troisième », « quatrième » ne sont qu'à titre indicatif pour distinguer des éléments qu'ils qualifient, mais n'impliquent pas d'ordre entre eux.

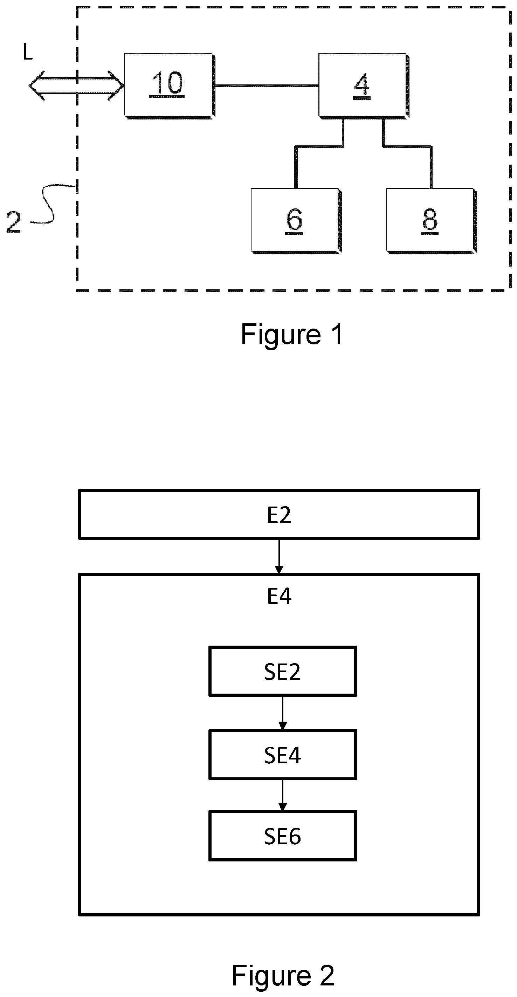

La figure 1 représente schématiquement un dispositif électronique 2 comprenant un processeur 4 (par exemple un microprocesseur), une entité de mémorisation 6, une mémoire vive 8 et une entité de communication 10.

La mémoire vive 8 et l'entité de mémorisation 6 sont chacune liées au processeur 4 de sorte que le processeur 4 peut lire ou écrire des données dans l'entité de mémorisation 6 et/ou la mémoire vive 8.

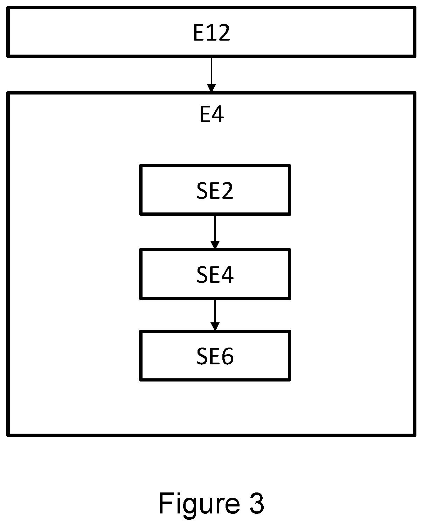

L'entité de mémorisation 6 mémorise des instructions de programme d'ordinateur, dont certaines sont conçues pour mettre en œuvre un procédé tel que décrit en référence à l'une des figures 2 et 3, lorsque ces instructions sont exécutées par le processeur 4.

L'entité de mémorisation 6 est par exemple un disque dur ou une mémoire non-volatile, éventuellement réinscriptible, par exemple de type EEPROM (pour "Electrically Erasable and Programmable Read-Only Memory" selon l'appellation anglo-saxonne couramment utilisée).

La mémoire vive 8 peut quant à elle mémoriser certains au moins des éléments (des premières parties, des données intermédiaires et/ou des troisièmes parties tel que décrites en référence au moins à une figure parmi les figures 2 et 3) manipulés lors des différents traitements effectués au cours d'un des procédés décrits ci-après.

On appelle mémoire dans la suite de la description, l'une quelconque parmi l'entité de mémorisation 6 et la mémoire vive 8.

Le dispositif électronique 2 comporte également plusieurs blocs (non représentés).

Typiquement, le dispositif électronique 2 comporte un bloc de détermination d'un deuxième ensemble de n données intermédiaires et un bloc de détermination d'un troisième ensemble de troisièmes parties.

Le dispositif électronique 2 peut comporter en outre un bloc cryptographique.

Chaque bloc possède une fonctionnalité décrite dans l'un des procédés conformes à l'invention et décrit ci-après en référence aux figures 2 et 3. Ainsi, pour chaque bloc, le dispositif électronique 2 mémorise par exemple des instructions de logiciel exécutables par le processeur 4 du dispositif électronique 2 afin d'utiliser un élément matériel (par exemple une entité de communication ou une mémoire) et de mettre ainsi en œuvre la fonctionnalité offerte par le bloc.

Selon une possibilité de réalisation, les instructions de programme d'ordinateur mémorisées dans l'entité de mémorisation 6 ont par exemple été reçues (typiquement d'un ordinateur distant) lors d'une phase de fonctionnement du dispositif électronique 2 antérieure aux procédés décrits en référence aux figures 2 et 3.

L'entité de communication 10 est reliée au processeur 4 de manière à permettre au processeur 4 de recevoir des données en provenance d'un autre dispositif électronique (non représenté) et/ou d'émettre des données à destination d'un autre dispositif électronique (non représenté). Dans certains modes de réalisation, le processeur 4 peut ainsi recevoir une donnée L de l'autre dispositif électronique, par exemples les instructions de programme d'ordinateur et/ou un message d'entrée, et /ou émettre un message de sortie. Un message d'entrée est par exemple un message que le dispositif électronique 2 doit signer à l'aide d'une clé cryptographique, la signature comprenant une comparaison sécurisée avec zéro d'une donnée avec un procédé tel que décrit en référence à la figure 2 ou 3. Un message de sortie est par exemple le résultat de ladite signature.

Le dispositif électronique 2 peut prendre de nombreuses formes (non représentées).

Selon un premier exemple, le dispositif électronique est une carte à puce, telle qu'une carte d'identité, une carte bancaire ou une carte à circuit intégré universelle (également connue sous le nom de carte UICC pour « Universal Integrated Circuit Card » en terminologie anglo-saxonne).

Dans ce cas, l'entité de communication 10 comprend par exemple des contacts affleurant sur une face de la carte à puce. En variante, l'entité de communication 10 pourrait être réalisée par un bloc de communication sans contact. De manière générale, l'entité de communication 10 peut être un bloc de communication filaire ou sans fil avec une autre dispositif électronique.

Selon un deuxième exemple, le dispositif électronique est un élément sécurisé, tel qu'un microcon-trôleur sécurisé, qui est intégré à un autre dispositif électronique, typiquement un terminal de communication ou une voiture.

Selon d'autres exemples, le dispositif électronique est une clé USB, un téléphone mobile, un ordinateur personnel, un serveur ou un document d'identité, tel qu'un passeport électronique.

Comme on le verra par la suite, le dispositif électronique 2 est configuré pour faire une comparaison sécurisée à zéro d'une donnée d'entrée masquée sous la forme d'un premier ensemble de n premières parties d'un masquage additif modulaire, typiquement de module q. Le dispositif électronique 2 peut en outre être configuré pour mettre en œuvre un algorithme cryptographique comprenant au moins une comparaison sécurisée à zéro selon un procédé de l'invention, par exemple tel que décrit en référence à la figure 2 ou à la figure 3.

Typiquement, l'algorithme cryptographique est mis en œuvre par le bloc cryptographique du dispositif électronique 2.

Selon un exemple de masquage additif modulaire, une quantité A est masquée additivement modulo un module B à n partages si elle est donnée sous la forme de n quantités $A_1, \ldots, A_n$ telle que l'équation suivante est satisfaite : $A_1 + \cdots + A_n = A \bmod B$. Dans cet exemple, la quantité A est dite masquée sous la forme de n parties $A_1, \ldots, A_n$ d'un masquage additif modulaire de module B, et les parties $A_1, \ldots, A_n$ sont dites un masquage additif modulaire de module B de la quantité A.

Selon un exemple de masquage booléen, une quantité A est masquée sous la forme de n quantité $A_1, \ldots, A_n$ telle que l'équation suivante est satisfaite : $A_1 \oplus \cdots \oplus A_n = A$, avec $\oplus$ l'opération ou exclusif. Dans cet exemple, la quantité A est dite masquée sous la forme de n parties $A_1, \ldots, A_n$ d'un masquage booléen, et les parties $A_1, \ldots, A_n$ sont dites un masquage booléen de la quantité A.

La figure 2 illustre sous forme de logigramme les étapes principales d'une comparaison sécurisée à zéro selon un premier mode de réalisation de l'invention. Plus précisément la figure 2 illustre les étapes principales d'une comparaison sécurisée à zéro d'une donnée d'entrée masquée sous la forme d'un premier ensemble de n premières parties d'un masquage additif modulaire de module q, n étant un entier strictement supérieur à 1.

Le module q est un entier non nul. Dans ce mode de réalisation de l'invention, l'entier n a pour valeur 2.

Typiquement, on a $x = (x_1 + x_2) \bmod q$ avec x la donnée d'entrée, $x_1$ et $x_2$ les premières parties du premier ensemble.

La comparaison sécurisée à zéro est ici mise en œuvre par le dispositif électronique 2 du fait de l'exécution des instructions de programme d'ordinateur mémorisées dans l'entité de mémorisation 6 comme indiqué ci-dessus.

Le procédé peut être mis en œuvre dans un algorithme cryptographique.

Le procédé permet ainsi l'implémentation de cet algorithme cryptographique dans un dispositif ayant des ressources calculatoires limitées, typiquement dans un élément sécurisé, une carte à puce, une clé USB ou un document d'identité.

L'algorithme cryptographique peut être un algorithme parmi l'algorithme Hamming Quasi-Cyclic, l'algorithme FrodoKEM et l'algorithme Crystals-Kyber.

Le procédé est particulièrement avantageux pour ces algorithmes qui nécessitent de nombreuses comparaisons sécurisées avec zéro.

Selon une étape (étape E2) de détermination d'un deuxième ensemble de n données intermédiaires, le processeur 4 détermine un deuxième ensemble de n données intermédiaires à partir des n premières parties, le deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0, c'est-à-dire si et seulement si la donnée d'entrée vaut 0.

Typiquement, le processeur 4 détermine la donnée intermédiaire du premier sous-ensemble comme étant une première partie et la donnée intermédiaire du deuxième sous-ensemble comme étant l'opposé modulo le module q d'une première partie distincte de la première partie du premier sous-ensemble, c'est-à-dire d'une première partie du premier ensemble, distincte de la première partie du premier sous-ensemble. Par exemple, le processeur 4 détermine une donnée intermédiaire $y_1$ du premier sous-ensemble et une donnée intermédiaire $y_2$ du deuxième sous-ensemble comme suit : $y_1 = x_1 \bmod q$ et $y_2 = -x_2 \bmod q$.

Le premier sous-ensemble et le deuxième sous-ensemble sont tels que :

- le premier résultat est égal à une somme modulo le module q des premières parties d'un troisième sous-ensemble, et
- le deuxième résultat est égal à une somme modulo le module q des opposés des premières parties d'un quatrième sous-ensemble,

- le troisième sous-ensemble et le quatrième sous-ensemble étant une partition du premier ensemble. Dans cet exemple, le premier ensemble est $\{x_1, x_2\}$, le deuxième ensemble est $\{y_1, y_2\}$, le premier sous-ensemble est $\{y_1\}$, le deuxième sous-ensemble est $\{y_2\}$, le troisième sous-ensemble est $\{x_1\}$, le quatrième sous-ensemble est $\{x_2\}$, le premier résultat a pour valeur $0 \oplus y_1 = y_1$, le deuxième résultat a pour valeur $0 \oplus y_2 = y_2$, la somme modulo le module q des premières parties du troisième sous-ensemble a pour valeur x1 mod q, et la somme modulo le module q des opposés des premières parties du quatrième sous-ensemble, a pour valeur $-x_2$ mod q. Ainsi, le résultat de la combinaison par ou exclusif du premier résultat et du deuxième résultat, a pour valeur 0 si la donnée d'entrée vaut 0 et une valeur non nulle si la donnée d'entrée a une valeur différente de 0.

En effet, l'égalité x = 0 est équivalente à l'égalité $(x_1 + x_2)$ mod q = 0 car x = $(x_1 + x_2)$ mod q. Or, l'égalité $0 = (x_1 + x_2)$ mod q est équivalente à l'égalité $x_1$ mod q = $-x_2$ mod q, c'est-à-dire à l'égalité $0 \oplus y_1 = 0 \oplus y_2$ et aux égalités $(x_1$ mod q$) \oplus (-x_2$ mod q$) = 0$ et $y_1 \oplus y_2 = 0$.

On notera qu'il n'est pas nécessaire de calculer le premier résultat ni de calculer le deuxième résultat pour déterminer un deuxième ensemble de n données intermédiaires ayant une partition en un premier sous-ensemble et un deuxième sous-ensemble avec une ou plusieurs des caractéristiques suivantes :

- le premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble quand et seulement quand la donnée d'entrée vaut 0,
- le premier résultat obtenu par combinaison avec des opérations ou exclusif de zéro et des données intermédiaires du premier sous-ensemble est égal à une somme modulo le module q des premières parties du troisième sous-ensemble,
- le deuxième résultat obtenu par combinaison avec des opérations ou exclusif de zéro et des données intermédiaires du deuxième sous-ensemble, est égal à une somme modulo le module q des opposés des premières parties du quatrième sous-ensemble.

L'étape de détermination d'un deuxième ensemble de n données intermédiaires (étape E2) est typiquement mise en œuvre par le bloc de détermination d'un deuxième ensemble de n données intermédiaires du dispositif électronique 2.

Le procédé comprend alors une étape (étape E4) de détermination d'un troisième ensemble de troisièmes parties d'un masquage booléen d'un résultat de la comparaison à partir des données intermédiaires.

Typiquement, l'étape de détermination du troisième ensemble traite toutes les données intermédiaires du deuxième ensemble comme des deuxièmes parties d'un masquage booléen.

La détermination du troisième ensemble de troisièmes parties à partir des données intermédiaires peut se faire selon les techniques connues de l'homme du métier, par exemple selon une première technique décrite dans les annexes C1 et C3 du document « Jean-Sébastien Coron, François Gérard, Simon Montoya, and Rina Zeitoun, High-order polynomial comparison and masking lattice-based encryption. IACR Trans. On Cryptographic Hardware And Embedded Systems, DOI :10.46586, 2023(1):153-192, 2023 ».

Dans cet exemple, chaque donnée intermédiaire a une taille de k bits et un rang i compris entre 1 et n, k étant strictement supérieur à 1. Chaque troisième partie a une taille d'un bit et un rang i compris entre 1 et n.

La détermination du troisième ensemble des troisièmes parties comprend la mise en œuvre d'une initialisation (sous-étape SE2) d'une troisième partie du troisième ensemble à 1 et des autres troisièmes parties dudit troisième ensemble à 0, puis la mise à jour d'une donnée intermédiaire (sous-étape SE4) de même rang que la troisième partie initialisée à 1, avec le complément à 1 de ladite donnée intermédiaire de même rang, puis la mise en œuvre de k sous-étapes (les k sous-étapes sont illustrées sous forme d'un groupe portant la référence SE6) de mise à jour des troisièmes parties du troisième ensemble, lesdites sous-étapes de mise à jour ayant des indices respectifs allant de 0 à k-1 , chaque sous-étape effectuant un calcul défini comme suit : $(b_1,...,b_n) \leftarrow \text{SecAnd}(1, (b_1,\ldots,b_n), (y_1^j,\ldots,y_n^j))$ avec SecAnd une implémentation sécurisée de l'opérateur booléen et, $y_i^j$ le bit de rang j de la donnée intermédiaire de rang i, $b_i$ la troisième partie de rang i, j ayant pour valeur l'indice de la sous-étape concernée.

En outre, l'implémentation sécurisée de l'opération booléen et, de la sous-étape d'indice j, mets à jour les troisièmes parties telles que : $\oplus_{i=1}^{n} b_i = (\oplus_{i=1}^{n} b_i) \wedge \left( \oplus_{i=1}^{n} y_i^j \right)$ avec $\oplus$ l'opération ou exclusif et $\wedge$ l'opérateur booléen et.

L'implémentation sécurisée de l'opération booléen et, peut se faire selon les techniques connues de l'homme du métier, par exemple selon la technique décrite dans l'annexe C1 du document « Jean-Sébastien Coron, François Gérard, Simon Montoya, and Rina Zeitoun, High-order polynomial comparison and masking lattice-based encryption. IACR Trans. on Cryptographic Hardware And Embedded Systems, DOI :10.46586, 2023(1):153-192, 2023 ».

Dans un autre exemple, la détermination du troisième ensemble de troisièmes parties à partir des données intermédiaires peut se faire selon une deuxième technique qui est décrite dans l'annexe C4 du document « Jean-Sébastien Coron, François Gérard, Simon Montoya, and Rina Zeitoun, High-order polynomial comparison and masking lattice-based encryption. IACR Trans. on Cryptographic Hardware And Embedded Systems, DOI :10.46586, 2023(1):153-192, 2023 ».

Le procédé est ainsi particulièrement avantageux car il ne nécessite aucune conversion d'un masquage additif modulaire en un masquage booléen.

Le procédé est notamment avantageux car il permet une comparaison sécurisée à zéro de la donnée d'entrée sans convertir le masquage additif modulaire de la donnée d'entrée en un masquage booléen de ladite donnée d'entrée.

Le premier sous-ensemble et le deuxième sous-ensemble ont une différence de cardinal inférieure ou égale à 1. Autrement dit, la différence entre le cardinal du premier sous- ensemble et le cardinal du deuxième sous-ensemble, est inférieure ou égale à 1. On notera en effet que dans ce mode de réalisation décrit en référence à la figure 2, le cardinal du premier sous- ensemble est égal au cardinal du deuxième sous-ensemble.

L'étape de détermination du troisième ensemble peut traiter toutes les données intermédiaires du deuxième ensemble comme des parties d'un même masquage booléen bien que lesdites données intermédiaires ne le soient pas.

Cela est rendu possible par l'étape de détermination d'un deuxième ensemble de n données intermédiaires telle que décrite ci-avant car le résultat de la combinaison par ou exclusif du premier résultat et du deuxième résultat, a pour valeur 0 si la donnée d'entrée vaut 0. et une valeur non nulle si la donnée d'entrée a une valeur différente de 0.

Autrement dit, cela est permis par la caractéristique du deuxième ensemble déterminé au cours du procédé, c'est-à-dire par le fait que le deuxième ensemble de n données intermédiaires a une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0, c'est-à-dire si et seulement si la donnée d'entrée vaut 0.

Le deuxième ensemble déterminé au cours du procédé a aussi pour caractéristique que sa partition en le premier sous-ensemble et le deuxième sous-ensemble est tel que :

- le premier résultat est égal à une somme modulo le module q des premières parties du troisième sous-ensemble, et
- le deuxième résultat est égal à une somme modulo le module q des opposés des premières parties du quatrième sous-ensemble.

Le procédé est également avantageux car il permet l'utilisation d'un module q quelconque, c'est-à-dire d'un module q qui n'est pas un nombre premier.

L'étape de détermination d'un troisième ensemble de troisièmes parties d'un masquage booléen d'un résultat de la comparaison (étape E4) est typiquement mise en œuvre par le bloc de détermination d'un troisième ensemble de troisièmes parties du dispositif électronique 2.

La figure 3 illustre sous forme de logigramme les étapes principales d'une comparaison sécurisée à zéro selon un deuxième mode de réalisation de l'invention. Plus précisément la figure 3 illustre les étapes principales d'une comparaison sécurisée à zéro d'une donnée d'entrée masquée sous la forme d'un premier ensemble de n premières parties d'un masquage additif modulaire de module q, n étant un entier strictement supérieur à 1.

Le module q est un entier non nul. Dans ce mode de réalisation de l'invention, l'entier n est strictement supérieur 2.

Typiquement, on a $x = (x_1 + \cdots + x_n)$ mod q avec x la donnée d'entrée, $x_1,...,x_n$ les n premières parties du premier ensemble.

La comparaison sécurisée à zéro est ici mise en œuvre par le dispositif électronique 2 du fait de l'exécution des instructions de programme d'ordinateur mémorisées dans l'entité de mémorisation 6 comme indiqué ci-dessus.

Le procédé peut être mis en œuvre dans un algorithme cryptographique.

Le procédé permet ainsi l'implémentation de cet algorithme cryptographique dans un dispositif ayant des ressources calculatoires limitées, typiquement dans un élément sécurisé, une carte à puce, une clé USB ou un document d'identité.

L'algorithme cryptographique peut être un algorithme parmi l'algorithme Hamming Quasi-Cyclic, l'algorithme FrodoKEM et l'algorithme Crystals-Kyber.

Le procédé est particulièrement avantageux pour ces algorithmes qui nécessitent de nombreuses comparaisons sécurisées avec zéro.

Selon une étape (étape E12) de détermination d'un deuxième ensemble de n données intermédiaires, le processeur 4 détermine un deuxième ensemble de n données intermédiaires à partir des n premières parties, le deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0, c'est-à-dire si et seulement si la donnée d'entrée vaut 0.

Typiquement, le processeur 4 détermine :

- les données intermédiaires du premier sous-ensemble comme étant un masquage booléen d'une donnée d'entrée partielle, les premières parties d'un troisième sous-ensemble étant un masquage additif modulaire de module q de la donnée d'entrée partielle, et
- les données intermédiaires du deuxième sous-ensemble comme étant un masquage booléen d'une autre donnée d'entrée partielle, les opposés modulo le module q des premières parties d'un quatrième sous-ensemble étant un masquage additif modulaire de module q de l'autre donnée d'entrée partielle,
- le troisième sous-ensemble et le quatrième sous-ensemble étant une partition du premier ensemble. Le premier sous-ensemble et le deuxième sous-ensemble sont tels que :
- le premier résultat est égal à une somme modulo le module q des premières parties d'un troisième sous-ensemble, et
- le deuxième résultat est égal à une somme modulo le module q des opposés des premières parties d'un quatrième sous-ensemble. Par exemple, le processeur 4 détermine m données intermédiaires $y_1,...,y_m$ tel que $y_1 \oplus ... \oplus y_m = (x_1 + \cdots + x_m) \bmod q$ et n - m données intermédiaires $y_{m+1},...,Y_n$ tel que $y_{m+1} \oplus ... \oplus y_n = (-x_{m+1} - \cdots - x_n) \bmod q$, m étant un entier compris entre 1 et n-1.

Dans cet exemple, le premier ensemble est $\{x_1,...,x_n\}$, le deuxième ensemble est $\{y_1,...,y_n\}$, le premier sous-ensemble est $\{y_1,...,y_m\}$, le deuxième sous-ensemble est $\{y_{m+1},...,y_n\}$, le troisième sous-ensemble est $\{x_1,...,x_m\}$, le quatrième sous-ensemble est $\{x_{m+1},...,x_n\}$, le premier résultat a pour valeur $0 \oplus y_1 ... \oplus y_m = y_1 ... \oplus y_m$, le deuxième résultat a pour valeur $0 \oplus y_{m+1} ... \oplus y_n = y_{m+1} ... \oplus y_n$, la somme modulo le module q des premières parties du troisième sous-ensemble a pour valeur $(x_1 + \cdots + x_m) \bmod q$, et la somme modulo le module q des opposés des premières parties du quatrième sous-ensemble, a pour valeur $(-x_{m+1} - \cdots - x_n) \bmod q$.

Selon une implémentation, le processeur 4 peut déterminer le troisième sous-ensemble en sélectionnant m premières parties du premier ensemble, m étant un entier compris entre 1 et n-1. Le processeur 4 peut ensuite déterminer le quatrième sous-ensemble en sélectionnant n-m premières parties du premier ensemble, lesdites n-m premières parties étant distinctes des m parties sélectionnées auparavant pour déterminer le troisième sous-ensemble.

D'autres implémentations sont possibles pour déterminer le troisième sous-ensemble et le quatrième sous-ensemble.

Ainsi, selon une première autre implémentation, le processeur 4 peut déterminer le troisième sous-ensemble et le quatrième sous-ensemble en sélectionnant une ou plusieurs première(s) partie(s) du premier ensemble tour à tour pour le troisième sous-ensemble et le quatrième sous-ensemble, la première partie sélectionnée ou les premières parties sélectionnées à un tour donné étant distinctes de la première partie sélectionnée ou des premières parties sélectionnées aux tours précédents.

Selon une deuxième autre implémentation, le processeur 4 associe au moins une première partie du premier ensemble, de manière aléatoire ou pseudo aléatoire, au troisième sous-ensemble ou au quatrième sous-ensemble.

Après avoir déterminé le troisième sous-ensemble, le processeur peut alors déterminer les données intermédiaires du premier sous-ensemble en appliquant un algorithme de conversion d'un masquage additif modulaire en un masquage booléen aux premières parties du troisième sous-ensemble. Après avoir déterminé le quatrième sous-ensemble, le processeur peut également déterminer les données intermédiaires du deuxième sous-ensemble en appliquant un algorithme de conversion d'un masquage additif modulaire en un masquage booléen aux opposés modulo le module q des premières parties du quatrième sous-ensemble. Typiquement pour l'exemple décrit ci avant, le processeur peut déterminer les données intermédiaires du deuxième sous-ensemble en appliquant un algorithme de conversion d'un masquage additif modulaire en un masquage booléen à $-x_{m+1} \bmod q, ..., -x_n \bmod q$.

La conversion d'un masquage additif modulaire en un masquage booléen peut se faire à l'aide d'un algorithme connu, par exemple tel que décrit dans le document « Jean-Sébastien Coron, Johann Großschädl, and Praveen Kumar Vadnala, Secure conversion between boolean and arithmetic masking of any order. In Proceedings of CHES 2014, pages 188-205, 2014 », ou tel que décrit dans le document « Jean-Sébastien Coron, François Gérard, Simon Montoya, and Rina Zeitoun, High-order table-based conversion algorithms and masking lattice-based encryption. IACR Trans. Cryptogr. Hardw. Embed. Syst., 2022(2):1-40, 2022 ».

Ainsi, le résultat de la combinaison par ou exclusif du premier résultat et du deuxième résultat, a pour valeur 0 si la donnée d'entrée vaut 0 et une valeur non nulle si la donnée d'entrée a une valeur différente de 0.

En effet, l'égalité x = 0 est équivalente à l'égalité $(x_1 + \cdots + x_n) \bmod q = 0$ car $x = (x_1 + \cdots + x_n) \bmod q$. Or, l'égalité $0 = (x_1 + \cdots + x_n) \bmod q$ est équivalente à l'égalité $(x_1 + \cdots + x_m) = -(x_{m+1} + \cdots + x_n) \bmod q = (-x_{m+1} - \cdots - x_n) \bmod q$, c'est-à-dire à l'égalité $0 \oplus y_1 \oplus ... \oplus y_m = 0 \oplus y_{m+1} \oplus ... \oplus y_n$ et donc à l'égalité $(y_1 \oplus ... \oplus y_m) \oplus (y_{m+1} \oplus ... \oplus y_n) = 0$.

On notera qu'il n'est pas nécessaire de calculer le premier résultat ni de calculer le deuxième résultat pour déterminer un deuxième ensemble de n données intermédiaires ayant une partition en un premier sous-ensemble et un deuxième sous-ensemble avec une ou plusieurs des caractéristiques suivantes :

- le premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble quand et seulement quand la donnée d'entrée vaut 0,
- le premier résultat obtenu par combinaison avec des opérations ou exclusif de zéro et des données intermédiaires du premier sous-ensemble est égal à une somme modulo le module q des premières parties du troisième sous-ensemble,
- le deuxième résultat obtenu par combinaison avec des opérations ou exclusif de zéro et des données intermédiaires du deuxième sous-ensemble est égal à une somme modulo le module q des opposés des premières parties du quatrième sous-ensemble.

L'étape de détermination d'un deuxième ensemble de n données intermédiaires (étape E12) est typiquement mise en œuvre par le bloc de détermination d'un deuxième ensemble de n données intermédiaires du dispositif électronique 2.

Le procédé comprend alors une étape (étape E4) de détermination d'un troisième ensemble de troisièmes parties d'un masquage booléen du résultat de la comparaison à partir des données intermédiaires, identique à celle décrite en référence à la figure 2.

Le procédé est ainsi avantageux car il permet une comparaison sécurisée à zéro de la donnée d'entrée sans convertir le masquage additif modulaire de la donnée d'entrée en un masquage booléen de ladite donnée d'entrée. Au contraire, le procédé convertit le masquage additif modulaire de module q d'une donnée d'entrée partielle, respectivement d'une autre donnée d'entrée partielle, en un masquage booléen de ladite donnée d'entrée partielle, respectivement en un masquage booléen de ladite autre donnée d'entrée partielle.

La donnée d'entrée partielle, respectivement l'autre donnée d'entrée partielle, est masquée sous la forme d'un nombre de parties strictement inférieur à n. Typiquement, la donnée d'entrée partielle est masquée sous la forme de m parties et l'autre donnée d'entrée partielle est masquée sous la forme de n-m parties.

Les conversions de masques de la donnée d'entrée partielle et de l'autre donnée d'entrée partielle sont ainsi moins consommatrices en ressources calculatoire du dispositif électronique qu'une conversion de masque de la donnée d'entrée.

Selon les techniques connues de l'homme du métier, les algorithmes de conversion d'un masquage additif modulaire vers un masquage booléen ont généralement une complexité asymptotique quadratique.

Typiquement la complexité de la conversion du masquage additif modulaire de module q de la donnée d'entrée en un masquage booléen de ladite donnée d'entrée est $C \cdot \log_2(q) \cdot n^2$ avec C un coefficient de complexité.

La complexité de la conversion du masquage additif modulaire de module q de la donnée d'entrée partielle en un masquage booléen de ladite donnée d'entrée partielle est $C \cdot \log_2(q) \cdot m^2$ avec m le cardinal du premier sous-ensemble et du troisième sous-ensemble.

La complexité de la conversion du masquage additif modulaire de module q de l'autre donnée d'entrée partielle en un masquage booléen de ladite autre donnée d'entrée partielle est $C \cdot \log_2(q) \cdot p^2$ avec p le cardinal du deuxième sous-ensemble et du quatrième sous-ensemble.

On a n = m + p et donc $C \cdot \log_2(q) \cdot n^2 > C \cdot \log_2(q) \cdot m^2 + C \cdot \log_2(q) \cdot p^2$.

De préférence, le premier sous-ensemble et le deuxième sous-ensemble ont des cardinaux dont la différence est inférieure ou égale à 1. Autrement dit, de préférence la différence entre le cardinal du premier sous-ensemble et le cardinal du deuxième sous-ensemble, est inférieure ou égale à 1.

De façon encore plus avantageuse, quand n est pair, le cardinal du premier sous-ensemble est égal au cardinal du deuxième sous-ensemble.

L'économie de ressource calculatoire du dispositif électronique est ainsi optimale.

$$C \cdot \log_2(q) \cdot m^2 + C \cdot \log_2(q) \cdot p^2 = \left(\frac{C}{2}\right) \cdot \log_2(q) \cdot n^2$$

Typiquement, quand m = p, on a .

Avec les techniques de conversion de masque connues de l'homme du métier, les conversions de masques de la donnée d'entrée partielle et de l'autre donnée d'entrée partielle sont ainsi deux fois moins consommatrices en ressources calculatoire du dispositif électronique qu'une conversion de masque de la donnée d'entrée.

L'étape de détermination du troisième ensemble peut traiter toutes les données intermédiaires du deuxième ensemble comme des parties d'un même masquage booléen bien que lesdites données intermédiaires ne le soient pas.

Cela est rendu possible par l'étape de détermination d'un deuxième ensemble de n données intermédiaires telle que décrite ci-avant car le résultat de la combinaison par ou exclusif du premier résultat et du deuxième résultat, a pour valeur 0 si la donnée d'entrée vaut 0 et une valeur non nulle si la donnée d'entrée a une valeur différente de 0.

Autrement dit, cela est permis par la caractéristique du deuxième ensemble déterminé au cours du procédé, c'est-à-dire par le fait que le deuxième ensemble de n données intermédiaires a une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0, c'est-à-dire si et seulement si la donnée d'entrée vaut 0.

Le deuxième ensemble déterminé au cours du procédé a aussi pour caractéristique que sa partition en le premier sous-ensemble et le deuxième sous-ensemble est tel que :

- le premier résultat est égal à une somme modulo le module q des premières parties du troisième sous-ensemble, et
- le deuxième résultat est égal à une somme modulo le module q des opposés des premières parties du quatrième sous-ensemble.

Le procédé est également avantageux car il permet l'utilisation d'un module q quelconque, c'est-à-dire d'un module q qui n'est pas un nombre premier.


**Revendications**

1. Procédé de comparaison sécurisée à zéro d'une donnée d'entrée masquée sous la forme d'un premier ensemble de n premières parties d'un masquage additif modulaire, n étant un entier strictement supérieur à 1, le procédé étant mis en œuvre par un dispositif électronique (2) et le procédé comprenant les étapes suivantes :

   - Détermination (E2,E12) d'un deuxième ensemble de n données intermédiaires à partir des n premières parties,
   - Détermination (E4) d'un troisième ensemble de troisièmes parties d'un masquage booléen d'un résultat de la comparaison à partir des données intermédiaires,

   le procédé étant **caractérisé en ce que** l'étape de détermination d'un deuxième ensemble de n données intermédiaires à partir des n premières parties, détermine un deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0.

2. Procédé de comparaison sécurisée à zéro selon la revendication précédente dans lequel :

   - le masquage additif modulaire est de module q non nul,
   - le premier résultat est égal à une somme modulo le module q des premières parties d'un troisième sous-ensemble, et
   - le deuxième résultat est égal à une somme modulo le module q des opposés des premières parties d'un quatrième sous-ensemble,
   - le troisième sous-ensemble et le quatrième sous-ensemble étant une partition du premier ensemble.

3. Procédé de comparaison sécurisée à zéro selon l'une quelconque des revendications précédentes dans lequel :

   - n a pour valeur 2,
   - la donnée intermédiaire du premier sous-ensemble est une première partie, et
   - la donnée intermédiaire du deuxième sous-ensemble est l'opposé modulo le module q d'une première partie distincte de la première partie du premier sous-ensemble.

4. Procédé de comparaison sécurisée à zéro selon la revendication 2, dans lequel :

   - n est strictement supérieur à 2,

- les données intermédiaires du premier sous-ensemble sont un masquage booléen d'une donnée d'entrée partielle, les premières parties du troisième sous-ensemble étant un masquage additif modulaire de module q de la donnée d'entrée partielle, et

- les données intermédiaires du deuxième sous-ensemble sont un masquage booléen d'une autre donnée d'entrée partielle, les opposés modulo le module q des premières parties du quatrième sous-ensemble étant un masquage additif modulaire de module q de l'autre donnée d'entrée partielle.

5. Procédé de comparaison sécurisée à zéro selon la revendication 2 ou 4, dans lequel l'étape de détermination d'un deuxième ensemble de n données intermédiaires à partir des n premières parties comprend :

- la détermination du troisième sous-ensemble et du quatrième sous-ensemble,
- la détermination des données intermédiaires du premier sous-ensemble par application d'un algorithme de conversion d'un masquage additif modulaire en un masquage booléen aux premières parties du troisième sous-ensemble, et
- la détermination des données intermédiaires du deuxième sous-ensemble par application d'un algorithme de conversion d'un masquage additif modulaire en un masquage booléen aux opposés modulo le module q des premières parties du quatrième sous-ensemble.

6. Procédé de comparaison sécurisée à zéro selon l'une quelconque des revendications précédentes, dans lequel le premier sous-ensemble et le deuxième sous-ensemble ont une différence de cardinal inférieure ou égale à 1.

7. Procédé de comparaison sécurisée à zéro selon l'une quelconque des revendications précédentes dans lequel l'étape de détermination du troisième ensemble traite toutes les données intermédiaires du deuxième ensemble comme des deuxièmes parties d'un masquage booléen.

8. Procédé de comparaison sécurisée à zéro selon l'une quelconque des revendications précédentes dans lequel :

- chaque donnée intermédiaire a une taille de k bits et un rang i compris entre 1 et n, k étant strictement supérieur à 1,
- chaque troisième partie a une taille de 1 bit et un rang i compris entre 1 et n,
- la détermination du troisième ensemble des troisièmes parties comprend la mise en œuvre d'une initialisation (SE2) d'une troisième partie du troisième ensemble à 1 et des autres troisièmes parties dudit troisième ensemble à 0, puis la mise à jour d'une donnée intermédiaire (SE4) de même rang que la troisième partie initialisée à 1, avec le complément à 1 de ladite donnée intermédiaire de même rang, puis la mise en œuvre (SE6) de k sous-étapes de mise à jour des troisièmes parties du troisième ensemble, lesdites sous-étapes de mise à jour ayant des indices respectifs allant de 0 à k-1 , chaque sous-étape effectuant un calcul défini comme suit : $(b_1,...,b_n) \leftarrow$

$$\text{SecAnd}(1, (b_1,\ldots,b_n),(y_1^j,\ldots,y_n^j))$$ avec SecAnd une implémentation sécurisée de l'opérateur booléen et, $y_i^j$ le bit de rang j de la donnée intermédiaire de rang i, $b_i$ la troisième partie de rang i, j ayant pour valeur l'indice de la sous-étape concernée.

9. Procédé de comparaison sécurisée à zéro selon la revendication précédente dans lequel l'implémentation sécurisée de l'opération booléen et, de la sous-étape d'indice j, mets à jour les troisièmes parties telles que :

$$\bigoplus_{i=1}^{n} b_i = \left(\bigoplus_{i=1}^{n} b_i\right) \wedge \left(\bigoplus_{i=1}^{n} y_i^j\right)$$ avec $\oplus$ l'opération ou exclusif et $\wedge$ l'opérateur booléen et.

10. Procédé de comparaison sécurisée à zéro selon l'une quelconque des revendications précédentes, le procédé étant mis en œuvre dans un algorithme cryptographique.

11. Procédé de comparaison sécurisée à zéro selon la revendication précédente, dans lequel l'algorithme cryptographique est un algorithme parmi l'algorithme Hamming Quasi-Cyclic, l'algorithme FrodoKEM et l'algorithme Crystals-Kyber.

12. Programme d'ordinateur comprenant des instructions exécutables par un processeur et adaptées à mettre en œuvre un procédé selon l'une quelconque des revendications précédentes, lorsque ces instructions sont exécutées par le processeur.

**13.** Dispositif électronique (2) apte à mettre en œuvre une comparaison sécurisée à zéro d'une donnée d'entrée masquée sous la forme d'un premier ensemble de n premières parties d'un masquage additif modulaire, n étant un entier strictement supérieur à 1, le dispositif électronique comprenant :

- un bloc de détermination d'un deuxième ensemble de n données intermédiaires configuré pour déterminer un deuxième ensemble de n données intermédiaires à partir des n premières parties,
- un bloc de détermination d'un troisième ensemble de troisièmes parties configuré pour déterminer un troisième ensemble de troisièmes parties d'un masquage booléen d'un résultat de la comparaison à partir des données intermédiaires,

le dispositif électronique étant **caractérisé en ce que** le bloc de détermination d'un deuxième ensemble de n données intermédiaires est configuré pour déterminer un deuxième ensemble de n données intermédiaires ayant une partition en un premier sous-ensemble et un deuxième sous-ensemble tels qu'un premier résultat obtenu par combinaison avec des opérations ou exclusif de zéro et des données intermédiaires du premier sous-ensemble, est égal à un deuxième résultat obtenu par combinaison avec des opérations ou exclusif de zéro et des données intermédiaires du deuxième sous-ensemble, quand et seulement quand la donnée d'entrée vaut 0.

Figure 1

Figure 2

Figure 3

**RAPPORT DE RECHERCHE EUROPEENNE**

Europäisches Patentamt
European Patent Office
Office européen des brevets

Numéro de la demande

EP 25 17 2095

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JAN-PIETER D'ANVERS ET AL: "Higher-Order Masked Ciphertext Comparison for Lattice-Based Cryptography", IACR, INTERNATIONAL ASSOCIATION FOR CRYPTOLOGIC RESEARCH , vol. 20211024:073717 21 octobre 2021 (2021-10-21), pages 1-24, XP061069123, Extrait de l'Internet: URL:https://eprint.iacr.org/2021/1422.pdf [extrait le 2021-10-21] * sections 2.4 et 4 ; algorithme 7 * ----- | 1-13 | INV. H04L9/00 |
| A | D'ANVERS JAN-PIETER ED - HAZAY CARMIT CARMIT HAZAY@BIU AC IL BAR-ILAN UNIVERSITY RAMAT GAN ISRAEL ET AL: "One-Hot Conversion: Towards Faster Table-Based A2B Conversion", 15 avril 2023 (2023-04-15), ADVANCES IN CRYPTOLOGY - EUROCRYPT 2023; [LECTURE NOTES IN COMPUTER SCIENCE; LECT.NOTES COMPUTER], SPRINGER NATURE SWITZERLAND, CHAM, PAGE(S) 628 - 657, XP047658744, ISSN: 0302-9743 ISBN: 978-3-031-30633-4 [extrait le 2023-04-15] * pages 630, 631 * ----- | 1-13 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 15 octobre 2025 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JEAN-SÉBASTIEN CORON** ; **FRANÇOIS GÉRARD** ; **SIMON MONTOYA** ; **INA ZEITOUN**. High-order polynomial comparison and masking lattice-based encryption.. *ACR Trans. on Cryptographie Hardware And Embedded Systems*, 2023 (1), 53-192
- **JEAN-SÉBASTIEN CORON** ; **OHANN GROßSCHÄDL** ; **PRAVEEN KUMAR VADNALA**. Secure conversion between boolean and arithmetic masking of any order.. *In Proceedings of CHES 2014*, 2014, 188-205
- **JEAN-SÉBASTIEN CORON** ; **FRANÇOIS GÉRARD** ; **SIMON MONTOYA** ; **RINA ZEITOUN**. High-order table-based conversion algorithms and masking lattice-based encryption. *IACR Trans. Cryptogr. Hardw. Embed. Syst*, 2022, vol. 2, 1-40